(19) Europäisches Patentamt
European Patent Office
Office européen des brevets

(11) **EP 4 664 551 A1**

(12) **EUROPEAN PATENT APPLICATION**
published in accordance with Art. 153(4) EPC

(43) Date of publication:
**17.12.2025 Bulletin 2025/51**

(21) Application number: **24880143.3**

(22) Date of filing: **17.10.2024**

(51) International Patent Classification (IPC):
**H01M 4/1395** (2010.01)     **H01M 4/04** (2006.01)
**H01M 4/38** (2006.01)     **H01M 4/134** (2010.01)
**H01M 10/42** (2006.01)     **H01M 10/052** (2010.01)
**H01M 4/62** (2006.01)     **H01M 4/02** (2006.01)

(52) Cooperative Patent Classification (CPC):
**H01M 4/02; H01M 4/04; H01M 4/134;**
**H01M 4/1395; H01M 4/38; H01M 4/62;**
**H01M 10/052; H01M 10/42;** Y02E 60/10

(86) International application number:
**PCT/KR2024/015759**

(87) International publication number:
**WO 2025/084806 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.10.2023   KR 20230140985**
**16.10.2024   KR 20240141418**

(71) Applicant: **LG Energy Solution, Ltd.**
**Seoul 07335 (KR)**

(72) Inventors:
• **LEE, Ilha**
**Daejeon 34122 (KR)**
• **KOO, Daeryung**
**Daejeon 34122 (KR)**
• **JOO, Mun Kyu**
**Daejeon 34122 (KR)**
• **HONG, Doyoung**
**Daejeon 34122 (KR)**
• **KWON, Yohan**
**Daejeon 34122 (KR)**
• **CHAE, Jonghyun**
**Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING ELECTRODE FOR LITHIUM SECONDARY BATTERY, ELECTRODE MANUFACTURED THEREFROM, AND LITHIUM SECONDARY BATTERY INCLUDING ELECTRODE**

(57)     The present invention relates to a method for manufacturing an electrode for a lithium secondary battery, the method including the steps of: preparing a transfer laminate including a lithium metal layer, a release layer, and a base material layer; and transferring the lithium metal layer and the release layer to at least one surface of an electrode active material layer such that the lithium metal layer comes into contact with the electrode active material layer, in which at least one of the lithium metal layer and the release layer transferred to at least one surface of the electrode active material layer includes two or more holes, and the holes have a shortest distance between adjacent holes that satisfies a predetermined distance, enabling lithium byproducts to be reduced; an electrode manufactured by the method; and a lithium secondary battery including the electrode.

[Figure 1]

## Description

[Technical Field]

This application claims priority to and the benefit of Korean Patent Application No. 10-2023-0140985 filed in the Korean Intellectual Property Office on October 20, 2023 and Korean Patent Application No. 10-2024-0141418 filed in the Korean Intellectual Property Office on October 16, 2024, the entire contents of which are incorporated herein by reference.
The present invention relates to a method for manufacturing an electrode for a lithium secondary battery, an electrode manufactured by the method, and a lithium secondary battery including the electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.
At present, a secondary battery is a representative example of an electrochemical device that uses such electrochemical energy, and the specified range of use thereof tends to be gradually expanding.
Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is actively being conducted on a method of manufacturing a high-density electrode with a higher energy density per unit volume as an electrode for such high-capacity lithium secondary batteries, and the trend is shifting toward higher loading to improve energy density.
In general, a secondary battery includes a positive electrode, a negative electrode, a separator interposed between the positive electrode and the negative electrode, an electrolyte, and the like. In addition, the electrode such as a positive electrode and a negative electrode may have an electrode active material layer provided on a current collector.
Note that lithium secondary batteries undergo lithium loss from the first charge after a battery is manufactured. During subsequent charge/discharge cycles and high-temperature storage periods, lithium loss continues to occur, albeit in very small amounts, leading to battery degradation. To compensate for such lithium loss, lithium is additionally injected into a battery before operating the battery, which is called pre-lithiation.

[Citation List]

[Patent Literature]

Japanese Patent No. 7125228B

[Detailed Description of the Invention]

[Technical Problem]

The present invention relates to a method for manufacturing an electrode for a lithium secondary battery capable of reducing byproducts on an electrode surface, an electrode manufactured by the method, and a lithium secondary battery including the electrode.

[Technical Solution]

An exemplary embodiment of the present specification provides a method for manufacturing an electrode for a lithium secondary battery, the method including: preparing a transfer laminate including a lithium metal layer, a release layer, and a base material layer; and transferring the lithium metal layer and the release layer to at least one surface of an electrode active material layer such that the lithium metal layer comes into contact with the electrode active material layer, in which at least one of the lithium metal layer and the release layer transferred to at least one surface of the electrode active material layer includes two or more holes, and the holes have a shortest distance between adjacent holes of 0.04 cm or greater and 1 cm or less.
An exemplary embodiment of the present specification provides an electrode for a lithium secondary battery manufactured according to the manufacturing method described above.
Another exemplary embodiment of the present specification provides an electrode for a lithium secondary battery, the electrode including: an electrode current collector layer; an electrode active material layer having a lithium metal layer transferred thereto; and a lithium byproduct layer, in which the lithium byproduct layer exhibits 3% or more of nitrogen (N) and 75% or more of oxygen (O) when analyzed by Energy-dispersive X-ray Spectroscopy (EDS) with a Scanning Electron Microscope (SEM), and an area of the lithium byproduct layer relative to a total area of the lithium metal layer transferred to the electrode active material layer is 42% or less.

Still another exemplary embodiment of the present specification provides a lithium secondary battery including the above-described electrode for a lithium secondary battery; a separator; and an electrolyte.

An exemplary embodiment of the present specification provides a battery module or battery pack including the lithium secondary battery described above.

Further, yet another exemplary embodiment of the present disclosure provides a battery pack including the battery module described above.

[Advantageous Effects]

The manufacturing method according to an exemplary embodiment of the present invention can manufacture an electrode for a lithium secondary battery, in which holes are formed at specific intervals before or after transferring a lithium metal layer to an electrode active material layer, releasing heat generated during pre-lithiation to thus minimize lithium byproducts generated on an electrode surface at high temperatures.

In addition, the electrode for a lithium secondary battery manufactured by the manufacturing method according to an exemplary embodiment of the present invention has the feature of reducing the area of lithium byproducts formed on the surface after completion of pre-lithiation, leading to minimization of the effect on electrode performance and prevention of safety issues.

[Brief Description of Drawings]

FIG. 1 is a view showing a stacked structure of a negative electrode for a lithium secondary battery according to an exemplary embodiment of the present invention.
FIG. 2 is a view showing a stacked structure of a lithium secondary battery according to an exemplary embodiment of the present invention.
FIG. 3 is a flowchart showing a method for manufacturing an electrode for a lithium secondary battery according to an exemplary embodiment of the present specification.
FIG. 4 is a view showing an electrode surface with a base material layer and a release layer removed after lithium metal transfer.
FIG. 5 is a view showing surfaces of electrodes for a lithium secondary battery according to Example 1, Example 2, and Comparative Examples 1 and 2.

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

In the present specification, 'p to q' means a range of 'p or more and q or less'.

In the present specification, the "specific surface area" is measured by a BET method, and specifically, is calculated from the adsorption amount of nitrogen gas at the temperature of liquid nitrogen (77K) using BELSORP-mini II commercially available from BEL Japan Inc. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

The measurement of the average particle diameter may be confirmed using water and Triton-X100 dispersant with a Microtrac apparatus (manufacturer: Microtrac model name: S3500). Specifically, the average particle diameter of a positive electrode active material may be measured under a condition of a refractive index of 1.5 to 1.7, and the average particle diameter of a negative electrode active material may be measured under a condition of a refractive index of 1.97 or 2.42. For example, after dispersing particles in a dispersion medium, the resulting dispersion is introduced into a commercially available laser diffraction particle size measuring device and irradiated with an ultrasonic wave of about 28 kHz with an output of 60 W. Thereafter, a cumulative volume particle size distribution graph is obtained, and then the average particle diameter may be determined by obtaining the particle size corresponding to 50% of the cumulative volume.

In the present specification, whether a lithium byproduct is formed can be confirmed through analysis of an elemental content on a surface, and specifically, the elemental content in each surface region can be analyzed through Energy-dispersive X-ray Spectroscopy (EDS) analysis with a Scanning Electron Microscope (SEM) (JSM-7610F).

In the present specification, the particle size or particle diameter may refer to the average diameter or representative diameter of each grain forming metal powder.

In the present specification, the description "a polymer includes a certain monomer as a monomer unit" means that the monomer participates in a polymerization reaction and is included as a repeating unit in the polymer. In the present invention, when the polymer includes a monomer, it is interpreted to be the same as when the polymer includes a monomer as a monomer unit.

In the present specification, it is understood that the term 'polymer' is used in a broad sense including a copolymer unless otherwise specified as 'a homopolymer'.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

Hereinafter, preferred exemplary embodiments of the present invention will be described in detail. However, it should be understood that the exemplary embodiments of the present invention may be modified in various forms and the scope of the present invention is not limited to the exemplary embodiments described below.

A method for manufacturing an electrode for a lithium secondary battery according to an exemplary embodiment of the present specification includes the steps of: preparing a transfer laminate including a lithium metal layer, a release layer, and a base material layer; and transferring the lithium metal layer and the release layer to at least one surface of an electrode active material layer such that the lithium metal layer comes into contact with the electrode active material layer, in which at least one of the lithium metal layer and the release layer transferred to at least one surface of the electrode active material layer includes two or more holes, and the holes have a shortest distance between adjacent holes of 0.04 cm or greater and 1 cm or less.

The method for manufacturing an electrode for a lithium secondary battery according to the present specification performs pre-lithiation by transferring lithium to at least one surface of an electrode active material layer in order to improve the Coulomb efficiency by solving the irreversible problem of silicon-based electrodes, and is a technology suitable for mass production processes as it can increase the process speed and enable scale-up compared to pre-lithiation by the SLMP method or electrochemical method.

However, when performing pre-lithiation by the transfer method, the reaction rate between the electrode active material and lithium metal is fast, so the maximum temperature of the surface of the electrode pre-lithiated with lithium metal may rise to about 40°C or higher, which leads to the formation of byproducts on the electrode surface and a loss of electrode capacity. Therefore, to solve the problems, the present invention has features of forming two or more holes having an appropriate shortest distance in at least one of the lithium metal layer and the release layer, thereby releasing heat generated during pre-lithiation to thus reduce the formation of byproducts on the electrode surface.

In the present specification, the shortest distance between adjacent holes refers to the shortest distance among distances between the outermost edge of one hole and the outermost edge of an adjacent hole.

The method for manufacturing an electrode for a lithium secondary battery according to an exemplary embodiment of the present specification includes a step of transferring a lithium metal layer and a release layer to at least one surface of an electrode active material layer such that the lithium metal layer comes into contact with the electrode active material layer, and in this case, at least one of the lithium metal layer and the release layer transferred to at least one surface of the electrode active material layer includes two or more holes.

In the present specification, two or more holes provided in at least one of the lithium metal layer and the release layer transferred to at least one surface of the electrode active material layer may be formed on the transfer laminate in the step of preparing the transfer laminate, may be formed on the transfer laminate in the step of bringing the transfer laminate into contact with at least one surface of the electrode active material layer, or may be formed on the electrode after completion of the transfer.

In an exemplary embodiment of the present specification, the step of transferring the lithium metal layer and the release layer to at least one surface of the electrode active material layer may include steps of laminating the transfer laminate with the electrode active material layer such that the lithium metal layer comes into contact with at least one surface of the electrode active material layer; separating the base material layer from the release layer; and forming two or more holes in at least one of the lithium metal layer and the release layer.

In another exemplary embodiment of the present specification, the step of preparing the transfer laminate may further include a step of forming two or more holes in at least one of the lithium metal layer, the release layer, and the base material layer.

For example, the step of forming holes may include steps of forming holes in the lithium metal layer, the release layer, or both the lithium metal layer and the release layer; and stacking the lithium metal layer and the release layer on one surface of the base material layer.

For example, the step of forming holes may include steps of forming a transfer laminate by stacking the lithium metal layer and the release layer on one surface of the base material layer; and forming the two or more holes in at least one of the lithium metal layer, the release layer, and the base material layer.

In an exemplary embodiment of the present specification, any known method for forming the holes can be used without limitation.

In the present specification, the holes may be formed in at least one layer of the lithium metal layer, the release layer, and the base material layer, but no such limitation is intended.

In the present specification, a depth of the holes may be within a range of a thickness of at least one of the lithium metal layer and the base material layer or the lithium metal layer, the release layer, and the base material layer, and specifically, may be within a range of a thickness of the release layer or a total thickness of the release layer and the lithium metal layer.

In an exemplary embodiment of the present specification, the shortest distance between adjacent holes may be 0.04 cm or greater and 1 cm or less.

In an exemplary embodiment of the present specification, the shortest distance between adjacent holes may be 0.04 cm or greater and 1 cm or less, specifically 0.1 cm or greater and 0.9 cm or less, and more specifically 0.2 cm or greater and 0.9 cm or less.

In the present specification, the adjacent holes refer to two holes with the shortest distance between the holes, with no other hole intervening.

When the shortest distance between adjacent holes according to an exemplary embodiment of the present specification falls within the specified range, heat generated during pre-lithiation can be released most effectively, thereby suppressing the formation of lithium oxide or nitride on the electrode surface.

However, as the shortest distance between adjacent holes decreases, a total area occupied by the two or more holes per an area of 1 cm$^2$ of at least one of the lithium metal layer and the release layer increases, which may cause a loss of the lithium metal layer intended for use in pre-lithiation. Therefore, it is preferable to satisfy the specified range in order to most effectively release the heat generated during pre-lithiation while minimizing an amount of the lithium metal layer to be discarded.

In an exemplary embodiment of the present specification, the longest diameter of the two or more holes may be 5 $\mu$m to 50 $\mu$m, specifically 7 $\mu$m to 40 $\mu$m, and more specifically 10 $\mu$m to 20 $\mu$m.

In this case, in an exemplary embodiment of the present specification, the holes have no limitation on their shape, and the longest diameter refers to a distance between two farthest points within a hole. For example, when the hole has a quadrilateral shape, the longest diameter may correspond to a length of a diagonal. Alternatively, for example, when the hole has a circular shape, the longest diameter may correspond to a diameter.

When the longest diameter of the hole according to an exemplary embodiment of the present specification falls within the specified range, an amount of lithium discarded due to the formation of the hole is small, and the effect of releasing heat during the pre-lithiation process suppresses the formation of lithium byproducts on the electrode surface, thereby reducing an amount of lithium to be discarded without being pre-lithiated into the electrode and enabling sufficient pre-lithiation to be performed.

In the present specification, the longest diameter of the hole can be observed with a microscope in a dry room.

In the method for manufacturing an electrode for a lithium secondary battery according to another exemplary embodiment of the present specification, at least one of the lithium metal layer and the release layer transferred to at least one surface of the electrode active material layer includes two or more holes, and a ratio of a total area occupied by the two or more holes to an area of 1 cm$^2$ of at least one of the lithium metal layer and the release layer may be 1.2% or less.

In an exemplary embodiment of the present specification, a ratio of a total area occupied by the two or more holes to an area of 1 cm$^2$ of at least one of the lithium metal layer and the release layer may be 1.2% or less, specifically 0.8% or less, and more specifically 0.1% or less.

In this case, the ratio (area ratio) of the total area occupied by the two or more holes was calculated by the following formula A, and the number of holes in a square of 1 cm$^2$ was calculated through the shortest distance between adjacent holes.

$$\text{area ratio (\%)} = \{(\text{area of one hole (cm}^2)) \times (\text{number of holes in 1 cm}^2 \text{ square})\}/(\text{square area of 1 cm}^2) \times 100 \qquad \text{[Formula A]}$$

When the ratio of a total area occupied by the two or more holes to an area of 1 cm$^2$ of at least one of the lithium metal layer and the release layer falls within the specified range, heat generated during the pre-lithiation process can be sufficiently released, while the amount of lithium metal layer to be discarded due to the formation of the holes can be minimized.

In the present specification, the number of holes occupying an area of 1 cm$^2$ of at least one of the lithium metal layer and the release layer may be 2 or more and 1000 or less, specifically 10 or more and 800 or less, and more specifically 15 or more and 80 or less. When the number of holes satisfying the shortest distance between holes and the longest diameter falls within the specified range, the effect of releasing heat generated during pre-lithiation can be maximized, while the amount of lithium metal layer to be discarded due to the formation of the holes can be minimized.

The method for manufacturing an electrode for a lithium secondary battery according to an exemplary embodiment of the present specification includes a step of preparing a transfer laminate including a lithium metal layer, a release layer, and a base material layer.

In the method for manufacturing an electrode for a lithium secondary battery according to an exemplary embodiment of the present specification, the transfer laminate may include a lithium metal layer, a release layer, and a base material layer, and specifically, the lithium metal layer, the release layer, and the base material layer may be sequentially stacked.

In an exemplary embodiment of the present specification, the lithium metal layer is a layer including lithium metal for pre-lithiating at least one surface of the electrode active material layer, and a commonly used Li metal foil may be used, but no such limitation is intended.

In an exemplary embodiment of the present specification, a thickness of the lithium metal layer may be 0.1 μm or greater and 10 μm or less, specifically 1 μm or greater and 8 μm or less, and more specifically 1 μm or greater and 6.2 μm or less.

In an exemplary embodiment of the present specification, when the thickness of the lithium metal layer falls within the specified range, pre-lithiation can proceed to an extent that solves the irreversible problem of the electrode, thereby improving the coulombic efficiency. Additionally, the amount of heat generated during pre-lithiation is small, and the heat is released well, so lithium loss and safety problems due to the formation of lithium byproducts may not occur.

In addition, in an exemplary embodiment of the present specification, the base material layer can be used without limitation as long as it has the characteristics of being able to withstand process conditions such as high temperatures during the step of depositing the lithium metal layer and to prevent the problem of reverse peeling, where the lithium metal layer is transferred onto the base material layer during a winding process for transferring the deposited lithium metal layer.

Specifically, in an exemplary embodiment of the present specification, the base material layer may be one or more selected from the group consisting of polyethylene terephthalate (PET), polyimide (PI), (poly(methylmethacrylate)) (PMMA), polypropylene, polyethylene, and polycarbonate.

In an exemplary embodiment of the present specification, a thickness of the base material layer may fall within a range of 1 μm or greater and 300 μm or less, specifically 5 μm or greater and 200 μm or less, and more specifically 10 μm or greater and 100 μm or less.

When the thicknesses of the base layer and the lithium metal layer fall within the specified ranges, the transfer of the lithium metal to the electrode active material layer can occur efficiently and the reverse transfer can be prevented.

In an exemplary embodiment of the present specification, a deposition method for depositing the lithium metal layer to the base material layer may be selected from a physical vapor deposition (PVD) method and a chemical vapor deposition (CVD) method, and among the physical vapor deposition methods, a thermal evaporation method may be mainly used. However, no such limitation is intended, and various deposition methods used in the art may be used.

In an exemplary embodiment of the present specification, the release layer may be one or more selected from the group consisting of polycarbonate (PC), polydimethylsiloxane (PDMS), polymethylhydrosiloxane (PMHS), polyimide (PI), and polymethylmethacrylate (PMMA).

In an exemplary embodiment of the present specification, a thickness of the release layer may be 0.2 μm or greater and 3 μm or less, specifically 0.5 μm or greater and 1 μm or less.

In an exemplary embodiment of the present specification, when the thickness of the release layer falls within the specified range, a sufficient release force can be secured.

In an exemplary embodiment of the present specification, the release layer may be formed by a coating method. For example, the coating method may be a method selected from the group consisting of dip coating, spray coating, spin coating, die coating, gravure coating, micro-gravure coating, comma coating, and roll coating, but is not limited thereto, and various coating methods that can be used in the art to form a coating layer can be used.

In an exemplary embodiment of the present specification, the step of transferring the lithium metal layer and the release layer to at least one surface of the electrode active material layer may include steps of laminating the transfer laminate with the electrode active material layer such that the lithium metal layer comes into contact with at least one surface of the electrode active material layer; and separating the base material layer from the release layer.

In an exemplary embodiment of the present specification, the laminating step includes a step of bringing the transfer laminate into contact such that the lithium metal layer comes into contact with at least one surface of the electrode active material layer, which is a preparation step for transferring lithium metal to the electrode active material layer.

In an exemplary embodiment of the present specification, the laminating step may further include a pressurizing step, which allows pre-lithiation caused by the transfer to the electrode active material layer to proceed more actively, resulting in the ability to form a thinner electrode despite the higher energy density.

In an exemplary embodiment of the present specification, the pressurizing step may involve applying a pressure of 50 kgf/cm$^2$ or higher and 2000 kgf/cm$^2$ or less, specifically 100 kgf/cm$^2$ or higher and 1000 kgf/cm$^2$ or less.

When the pressure during the pressurizing step falls within the specified range, pre-lithiation can proceed at an appropriate rate, which can reduce heat generated during the pre-lithiation, thereby reducing the formation of surface byproducts and improving the energy density of the electrode.

The method for manufacturing an electrode for a lithium secondary battery according to an exemplary embodiment of the present specification may include a step of separating the base material layer from the release layer.

In an exemplary embodiment of the present specification, the electrode active material layer may be a negative electrode active material layer or a positive electrode active material layer.

In an exemplary embodiment of the present specification, the electrode active material layer may be a negative electrode active material layer, the negative electrode active material layer may include a negative electrode active material, a negative electrode conductive material, and a negative electrode binder, and the negative electrode active material may be a silicon-based negative electrode active material including one or more selected from the group consisting of Si, SiO$_x$ (0 < x < 2), Si/C, and a Si alloy.

In an exemplary embodiment of the present specification, the negative electrode active material may be a silicon-based negative electrode active material including one or more selected from the group consisting of Si and SiO$_x$ (0 < x < 2).

In an exemplary embodiment of the present specification, the negative electrode active material may be a silicon-based negative electrode active material including one or more selected from the group consisting of Si and SiO$_x$ (0 < x < 2), and the silicon-based negative electrode active material may be included in an amount of 10 parts by weight or more and 99 parts by weight or less, specifically 20 parts by weight or more and 90 parts by weight or less, and more specifically 30 parts by weight or more and 80 parts by weight or less, based on 100 parts by weight of a negative electrode active material layer composition.

According to an exemplary embodiment of the present specification, the negative electrode composition uses the specific conductive material and binder that can control the volume expansion rate during the charge and discharge processes even when the silicon-based active material with a significantly high capacity is used within the specified range. As a result, the performance of the negative electrode is not deteriorated even within the specified range, and excellent output characteristics during charging and discharging are achieved.

In an exemplary embodiment of the present specification, the silicon-based negative electrode active material may use, in particular, pure silicon (Si) as the silicon-based active material. Using pure silicon (Si) as a negative electrode active material may mean that, based on 100 parts by weight of the total negative electrode active material as described above, pure Si particles, which are not combined with other particles or elements, are included within the specified range.

Specifically, in an exemplary embodiment of the present specification, the negative electrode active material may include Si, and the Si may be included in an amount of 10 parts by weight or more and 99 parts by weight or less, specifically 20 parts by weight or more and 90 parts by weight or less, and more specifically 30 parts by weight or more and 80 parts by weight or less, based on 100 parts by weight of the negative electrode active material layer composition.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In the present invention, in order to solve the above problems, the negative electrode of a lithium secondary battery is pre-lithiated to solve the initial irreversible capacity problem. Specifically, the negative electrode is pretreated before the pre-lithiation process so that, in the pre-lithiation process, during the lithium transfer process, lithium metal can be easily transferred from a transfer laminate, and lithium in the negative electrode active material layer can be uniformly pre-lithiated.

In addition, the present invention uses the silicon-based negative electrode active material as a negative electrode active material in order to improve the capacity performance, while using a binder of a specific condition and a conductive material in order to solve the problems of maintaining the conductive path and the combination of the conductive material, the binder, and the active material in relation to the volume expansion.

Note that an average particle diameter (D50) of the silicon-based negative electrode active material of the present specification may be 3 $\mu$m to 10 $\mu$m, specifically 3.5 $\mu$m to 8 $\mu$m. When the average particle diameter falls within the specified range, a specific surface area of the particles is within a suitable range, so that a viscosity of an electrode slurry is formed within an appropriate range. Accordingly, the particles constituting the electrode slurry are smoothly dispersed. In addition, the size of the silicon-based active material has a value equal to or greater than the lower limit of the range, resulting in an excellent contact area between the silicon-based negative electrode active material and the negative electrode conductive material due to a composite composed of the conductive material and binder in the electrode slurry, which increases the likelihood of maintaining a conductive network, thereby improving the capacity retention rate. Note that, when the average particle diameter falls within the specified range, excessively large silicon-based negative electrode active material particles are excluded, resulting in formation of a smooth surface of the electrode. Accordingly, a phenomenon of current density non-uniformity during charging and discharging can be prevented.

In an exemplary embodiment of the present specification, the silicon-based negative electrode active material generally has a characteristic BET specific surface area. The BET specific surface area of the silicon-based negative electrode active material is 0.01 m$^2$/g to 150.0 m$^2$/g, specifically 0.1 m$^2$/g to 100.0 m$^2$/g, more specifically 0.2 m$^2$/g to 80.0 m$^2$/g, particularly specifically 0.2 m$^2$/g to 18.0 m$^2$/g. The BET specific surface area is measured in accordance with DIN 66131 (using nitrogen).

In an exemplary embodiment of the present specification, the silicon-based negative electrode active material may have a non-spherical shape and its sphericity (circularity) is, for example, 0.9 or less, for example, 0.7 to 0.9, for example, 0.8 to 0.9, for example, 0.85 to 0.9.

In the present specification, the circularity is determined by Formula A-1 below, where A is an area and P is a boundary line.

$$[\text{Formula A-1}]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery. Therefore, a type of negative electrode conductive material that is used together with the silicon-based active material is important.

Accordingly, in an exemplary embodiment of the present specification, the negative electrode conductive material may include one or more selected from the group consisting of a point-like conductive material, a linear conductive material, and a planar conductive material.

In an exemplary embodiment of the present specification, the point-like conductive material refers to a conductive material with a zero-dimensional (0D) structure, in which a structure of a crystal cluster composed of one to several hundred atoms assumes a round spherical shape and has a volume. The point-like conductive material may be used to improve conductivity of a negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of implementing high conductivity and having excellent dispersibility.

In an exemplary embodiment of the present specification, the point-like conductive material may have a BET specific surface area of 40 m$^2$/g or greater and 70 m$^2$/g or less, specifically 45 m$^2$/g or greater and 65 m$^2$/g or less, and more specifically 50 m$^2$/g or greater and 60 m$^2$/g or less.

In an exemplary embodiment of the present specification, a particle diameter of the point-like conductive material may be 10 nm to 100 nm, specifically 20 nm to 90 nm, and more specifically 20 nm to 60 nm.

In an exemplary embodiment of the present specification, the negative electrode conductive material may include a planar conductive material.

In an exemplary embodiment of the present specification, the planar conductive material refers to a conductive material with a two-dimensional (2D) structure, in which atoms form a crystal structure on a plane with a thickness of a single atomic layer or multiple atomic layers of two or more layers. The planar conductive material refers to a material for securing a conductive path in a planar form within the negative electrode active material layer, and at the same time can play a role in suppressing disconnection of the conductive path due to volume expansion, and can be expressed as a plate-like conductive material or a bulk conductive material. Specifically, the planar conductive material may include at least one selected from the group consisting of plate-like graphite, graphene, graphene oxide, and graphite flake, and may preferably be plate-like graphite.

In an exemplary embodiment of the present specification, an average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the specified range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present specification, the planar conductive material may have a D10 of 0.5 $\mu$m or greater and 1.5 $\mu$m or less, a D50 of 2.5 $\mu$m or greater and 3.5 $\mu$m or less, and a D90 of 7.0 $\mu$m or greater and 15.0 $\mu$m or less.

In an exemplary embodiment of the present specification, for the planar conductive material, a planar conductive material with a high specific surface area having a high BET specific surface area or a planar conductive material with a low specific surface area may be used.

In an exemplary embodiment of the present specification, for the planar conductive material, a planar conductive material with a high specific surface area or a planar conductive material with a low specific surface area may be used without limitation. However, in particular, the planar conductive material according to the present specification can be affected to some extent in the electrode performance by the dispersion effect, so that a planar conductive material with a low specific surface area, which does not cause a problem in dispersion, is used particularly preferably.

In an exemplary embodiment of the present specification, the planar conductive material may have a BET specific surface area of 5 $m^2$/g or greater.

In another exemplary embodiment, the planar conductive material may have a BET specific surface area of 5 $m^2$/g or greater and 500 $m^2$/g or less, specifically 5 $m^2$/g or greater and 300 $m^2$/g or less, and more specifically 5 $m^2$/g or greater and 250 $m^2$/g or less.

In another exemplary embodiment, the planar conductive material is a planar conductive material with a high specific surface area, and the BET specific surface area may fall within a range of 50 $m^2$/g or greater and 500 $m^2$/g or less, specifically 80 $m^2$/g or greater and 300 $m^2$/g or less, and more specifically 100 $m^2$/g or greater and 300 $m^2$/g or less.

In another exemplary embodiment, the planar conductive material is a planar conductive material with a low specific surface area, and the BET specific surface area may fall within a range of 5 $m^2$/g or greater and 40 $m^2$/g or less, specifically 5 $m^2$/g or greater and 30 $m^2$/g or less, and more specifically 5 $m^2$/g or greater and 25 $m^2$/g or less.

In an exemplary embodiment of the present specification, the linear conductive material refers to a conductive material with a one-dimensional (1D) structure having a diameter in the nanometer order and a high aspect ratio, or a conductive material having a fibrous structure such as a cylindrical type or a tube type. Examples of the linear conductive material include carbon nanotubes, and the carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet in the shape of a cylinder with a nanoscale diameter and has an $sp^2$ bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present specification, the linear conductive material may include any one selected from the group consisting of single-walled carbon nanotubes (SWCNTs) and multi-walled carbon nanotubes (MWCNTs), and specifically may include single-walled carbon nanotubes (SWCNTs).

In an exemplary embodiment of the present specification, the linear conductive material may have a BET specific surface area of 100 $m^2$/g or greater and 100,000 $m^2$/g or less, specifically 500 $m^2$/g or greater and 10,000 $m^2$/g or less, and more specifically 1,000 $m^2$/g or greater and 5,000 $m^2$/g or less.

In addition, in an exemplary embodiment of the present specification, an aspect ratio of the linear conductive material may be 500 or greater and 1,000,000 or less, specifically 1,000 or greater and 100,000 or less, and more specifically 10,000 or greater and 100,000 or less.

In an exemplary embodiment of the present specification, the negative electrode conductive material may include one or more selected from the group consisting of plate-like graphite, single-walled carbon nanotubes (SWCNTs), and multi-walled carbon nanotubes (MWCNTs), but is not limited thereto.

In an exemplary embodiment of the present specification, the conductive material may preferably include one selected from the group consisting of plate-like graphite, single-walled carbon nanotubes (SWCNTs), and multi-walled carbon nanotubes (MWCNTs) as a first conductive material, and another one as a second conductive material, but no such limitation is intended.

In an exemplary embodiment of the present specification, the negative electrode conductive material may be included in an amount of 10 parts by weight or more and 40 parts by weight or less based on 100 parts by weight of the negative electrode active material layer composition.

In another exemplary embodiment, the negative electrode conductive material may be included in an amount of 10 parts by weight or more and 40 parts by weight or less, specifically 10 parts by weight or more and 30 parts by weight or less, and more specifically 10 parts by weight or more and 20 parts by weight or less, based on 100 parts by weight of the negative electrode active material layer composition.

The negative electrode conductive material according to the present specification has a completely different composition from a conductive material that is applied to the positive electrode. That is, the negative electrode conductive material according to the present specification serves to support a contact point between silicon-based active materials, which undergo a large volume expansion of the electrode due to charging and discharging, and is completely different in composition and role from the positive electrode conductive material that serves to impart partial conductivity while playing a buffer role as a cushioning role when rolled.

In addition, the negative electrode conductive material according to the present specification is applied to a silicon-based negative electrode active material and has a completely different composition from that of the conductive material applied to a graphite-based active material. That is, the conductive material used for an electrode having a graphite-based active material simply has small particles with respect to the active material, and thus has the characteristics of enhancing output characteristics and imparting partial conductivity, and the composition and role thereof are completely different from those of the negative electrode conductive material applied together with a silicon-based negative electrode active material as in the present invention.

In an exemplary embodiment of the present specification, the point-like conductive material used as the negative electrode conductive material has a different structure and role from the carbon-based active material generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in an exemplary embodiment of the present specification, the use of plate-like graphite as a conductive material means that it is processed into a planar or plate-like shape and used as a material that secures a conductive path rather than a role of storing or releasing lithium. In this case, the negative electrode active material included together has high-capacity characteristics with respect to storing and releasing lithium, and serves to store and release all lithium ions transferred from the positive electrode.

In an exemplary embodiment of the present specification, the negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylamide, ethylene-propylene-diene monomer (EPDM), sulfonated EPDM, styrene butadiene rubber (SBR), fluoro rubber, poly acrylic acid, and materials in which hydrogen thereof is substituted with Li, Na, Ca, or the like, and may also include various copolymers thereof.

According to an exemplary embodiment of the present specification, the negative electrode binder serves to support the active material and conductive material in order to prevent distortion and structural deformation of the negative electrode structure during the volume expansion and relaxation of the silicon-based active material. When the above-mentioned role is satisfied, all general binders can be applied, specifically, an aqueous binder can be used, and more specifically, a polyacrylamide (PAM)-based binder can be used.

In an exemplary embodiment of the present specification, the negative electrode binder may be included in an amount of 1 part by weight or more and 30 parts by weight or less, specifically 3 parts by weight or more and 25 parts by weight or less, and more specifically 3 parts by weight or more and 20 parts by weight or less, based on 100 parts by weight of the negative electrode active material layer composition.

When the content of the negative electrode binder falls within the specified range, the mechanical strength is excellent, and the interaction between molecules is high, resulting in excellent binding force between electrodes. In addition, when the specified range is satisfied, the viscosity of the negative electrode binder can be set within an appropriate range, which can further improve the coatability of an electrode when an electrode is manufactured using the same.

The negative electrode according to an exemplary embodiment of the present specification may include the above-described negative electrode active material, a negative electrode conductive material, and a negative electrode binder.

Specifically, the negative electrode may include a negative electrode current collector layer and a negative electrode active material layer arranged on at least one surface of the negative electrode current collector layer. The negative electrode active material layer may include the negative electrode active material described above. Furthermore, the negative electrode active material layer may further include a thickener.

In an exemplary embodiment of the present specification, the negative electrode current collector layer may generally have a thickness of 1 $\mu$m to 100 $\mu$m. The negative electrode current collector layer is not particularly limited as long as it has high conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present specification, a thickness of the negative electrode current collector layer may be 1 $\mu$m or greater and 100 $\mu$m or less, and a thickness of the negative electrode may be 20 $\mu$m or greater and 500 $\mu$m or less. However, the thickness may vary depending on the type and purpose of the negative electrode active material, negative electrode conductive material, and negative electrode binder used and is not limited thereto.

The negative electrode active material layer may be formed by applying a negative electrode slurry, which includes a negative electrode active material, a binder, a thickener, and/or a conductive material, to at least one surface of the negative electrode current collector, followed by drying and rolling.

In an exemplary embodiment of the present specification, the negative electrode slurry may include a negative electrode active material layer composition and a slurry solvent.

In an exemplary embodiment of the present specification, a solid content of the negative electrode slurry may fall within a range of 5% or more and 40% or less.

In another exemplary embodiment, the solid content of the negative electrode slurry may fall within a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material composition based on 100 parts by weight of the negative electrode slurry.

When the solid content of the negative electrode slurry falls within the specified range, an appropriate viscosity is secured when forming a negative electrode active material layer, thereby minimizing particle agglomeration of the negative electrode active material layer composition and enabling efficient formation of the negative electrode active material layer.

In another exemplary embodiment of the present specification, the solvent may include those known in the art. For example, the solvent may be water (e.g., distilled water) or NMP.

According to an exemplary embodiment of the present specification, the negative electrode may be formed by coating and drying the negative electrode slurry on one surface or both surfaces of a negative electrode current collector layer, and the slurry solvent in the negative electrode slurry may be dried through the drying step.

The method for manufacturing an electrode for a lithium secondary battery according to an exemplary embodiment of the present specification may further include a step of forming an electrode active material layer by coating an electrode composition slurry on at least one surface of an electrode current collector layer before the step of transferring the lithium metal layer and the release layer to at least one surface of the electrode active material layer.

In the method for manufacturing an electrode for a lithium secondary battery according to an exemplary embodiment of the present specification, the step of coating the electrode slurry on one surface or both surfaces of the electrode current collector layer may further include a drying step, and the slurry solvent in the electrode slurry may be dried through the drying step.

In this case, the electrode in the method for manufacturing an electrode for a lithium secondary battery according to an exemplary embodiment of the present specification may refer to a negative electrode or a positive electrode, and the description of the method for forming the negative electrode active material layer described above may be applied to the step of forming the electrode active material layer, as well as the positive electrode active material layer described below.

An electrode for a lithium secondary battery according to another exemplary embodiment of the present specification may be manufactured according to the manufacturing method according to an exemplary embodiment of the present specification described above.

In the electrode for a lithium secondary battery according to another exemplary embodiment of the present specification, an area of a lithium byproduct formed on a surface of the electrode relative to an area of the transfer laminate in contact with at least one surface of the electrode active material layer may be 42% or less. Specifically, the area of the lithium byproduct layer relative to a total area of the lithium metal layer transferred to the electrode active material layer may be 42% or less.

When the electrode active material layer is pre-lithiated by the conventional transfer method, lithium byproducts were formed on the electrode surface, and the area of the byproducts was about 44% or greater of the area, where the lithium metal layer is transferred, of the electrode active material layer.

However, in the electrode for a lithium secondary battery according to an exemplary embodiment of the present specification, the area of a lithium byproduct formed on a surface of the electrode relative to an area of the transfer laminate in contact with at least one surface of the electrode active material layer may be 42% or less, specifically 40% or less. That is, lithium loss caused by the formation of byproducts, such as lithium oxide or lithium nitride formed from transferred lithium, can be reduced.

Additionally, in the present specification, the lithium byproduct can be confirmed through Energy-dispersive X-ray Spectroscopy (EDS) analysis with a Scanning Electron Microscope (SEM). Specifically, when analyzed by EDS with a SEM, nitrogen (N) is found to be 3% or more and oxygen (O) is found to be 75% or more.

That is, an electrode for a lithium secondary battery according to another exemplary embodiment of the present specification includes an electrode current collector layer; an electrode active material layer having a lithium metal layer transferred thereto; and a lithium byproduct layer, in which the lithium byproduct layer exhibits 3% or more of nitrogen (N) and 75% or more of oxygen (O) when analyzed by Energy-dispersive X-ray Spectroscopy (EDS) with a Scanning Electron Microscope (SEM), and an area of the lithium byproduct layer relative to a total area of the lithium metal layer transferred to the electrode active material layer is 42% or less.

In another exemplary embodiment of the present specification, a pre-lithiation capacity per unit area of the electrode for a lithium secondary battery manufactured by the above-described manufacturing method may be 20% or less, specifically 15% or less of a capacity per unit area of the electrode.

The pre-lithiation capacity per unit area is a capacity of lithium added to the electrode through pre-lithiation, and when the specified range is satisfied, it is possible to compensate for the irreversible capacity of the electrode while maintaining a balance with the capacity of the negative electrode or positive electrode.

In addition, a lithium secondary battery according to an exemplary embodiment of the present specification includes the above-described electrode for a lithium secondary battery; a separator; and an electrolyte, in which the electrode for a lithium secondary battery is at least one of the positive electrode and the negative electrode. Since the negative electrode has been described above, a detailed description thereof is omitted.

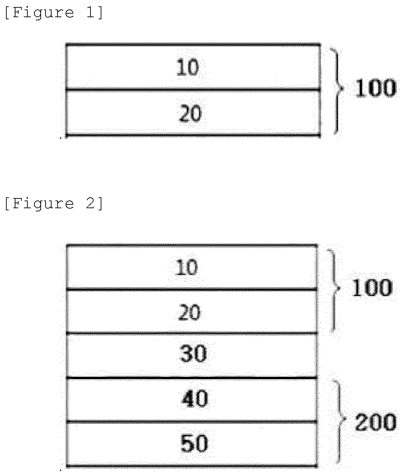

FIG. 1 is a view showing a stack structure of a negative electrode for a lithium secondary battery according to an exemplary embodiment of the present specification. Specifically, a negative electrode 100 for a lithium secondary battery including a negative electrode active material layer 20 on one surface of a negative electrode current collector layer 10 can be seen. FIG. 1 shows that the negative electrode active material layer is formed on one surface of the negative electrode current collector layer, but the negative electrode active material layer may be formed on both surfaces of the negative electrode current collector layer.

FIG. 2 is a view showing a stacked structure of a lithium secondary battery according to an exemplary embodiment of the present specification. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and it is shown that the negative electrode 100 for a lithium secondary battery and the positive electrode 200 for a lithium secondary battery are formed in a structure in which they are stacked with a separator 30 interposed therebetween. In this case, at least one of the negative electrode and the positive electrode for a lithium secondary battery may be manufactured according to the manufacturing method according to an exemplary embodiment of the present specification.

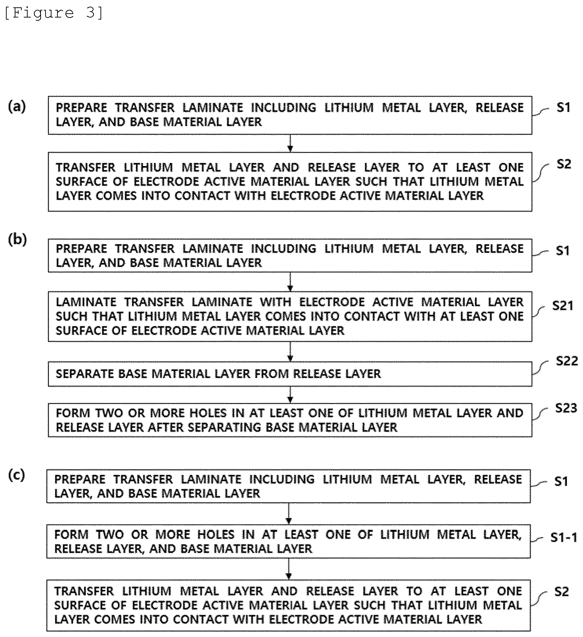

FIG. 3 is a flowchart showing a method for manufacturing an electrode for a lithium secondary battery according to an exemplary embodiment of the present specification. Specifically, FIG. 3(a) shows a method for manufacturing an electrode for a lithium secondary battery, including a step S1 of preparing a transfer laminate including a lithium metal layer, a release layer, and a base material layer; and a step S2 of transferring the lithium metal layer and the release layer to at least one surface of an electrode active material layer such that the lithium metal layer comes into contact with the electrode active material layer.

FIG. 3(b) shows a method for manufacturing an electrode for a lithium secondary battery, including a step S1 of preparing a transfer laminate including a lithium metal layer, a release layer, and a base material layer; a step S21 of laminating the transfer laminate with an electrode active material layer such that the lithium metal layer comes into contact with at least one surface of the electrode active material layer; a step S22 of separating the base material layer from the release layer; and a step S23 of forming two or more holes in at least one of the lithium metal layer and the release layer after separating the base material layer.

FIG. 3(c) shows a method for manufacturing an electrode for a lithium secondary battery, including a step S1 of preparing a transfer laminate including a lithium metal layer, a release layer, and a base material layer; a step S1-1 of forming two or more holes in at least one of the lithium metal layer, the release layer, and the base material layer; and a step S2 of transferring the lithium metal layer and the release layer to at least one surface of an electrode active material layer such that the lithium metal layer comes into contact with the electrode active material layer.

In this case, the method for manufacturing an electrode for a lithium secondary battery according to an exemplary embodiment of the present specification may further include a step (not shown) of providing an electrode active material layer on at least one surface of an electrode current collector layer, and this step may be performed before the step S1, may be performed simultaneously with the step S1, or may be performed between the steps S1 and S2, or between the steps S1 and S21, but no such limitation is intended.

The positive electrode may include a positive electrode current collector layer and a positive electrode active material layer formed on at least one surface of the positive electrode current collector layer and including the positive electrode active material.

In the positive electrode, the positive electrode current collector layer is not particularly limited as long as it has conductivity without causing a chemical change in the battery, and for example, stainless steel, aluminum, nickel, titanium, fired carbon, or aluminum or stainless steel surface-treated with carbon, nickel, titanium, silver, or the like may be used. In addition, the positive electrode current collector layer may typically have a thickness of 3 $\mu$m to 500 $\mu$m, and fine irregularities may be formed on a surface of the positive electrode current collector layer to enhance the adhesive strength of the positive electrode active material. For example, the positive electrode current collector layer may be used in various forms, such as a film, a sheet, a foil, a net, a porous body, a foamed body, a non-woven body, and the like.

According to an exemplary embodiment of the present specification, the positive electrode active material may include one or more selected from the group consisting of lithium manganese oxide, lithium cobalt oxide, lithium nickel oxide, lithium iron oxide, lithium aluminum oxide, or a lithium composite oxide containing a combination thereof.

Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.5$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as it has electronic conductivity without causing a chemical change in a battery to be configured. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve attachment between particles of the positive electrode active material and adhesive force between the positive electrode active material and the positive electrode current collector. Specific examples may include polyvinylidenefluoride (PVdF), polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The solvent used in the positive electrode composition slurry may be a solvent that is generally used in the relevant technical field, and may include dimethyl sulfoxide (DMSO), isopropyl alcohol, N-methylpyrrolidone (NMP), acetone, or water, and one of these may be used alone, or a mixture of two or more may be used. A usage amount of the solvent is sufficient if it can dissolve or disperse the active material, the conductive material, and the binder in consideration of an applied thickness of a slurry and a manufacturing yield, and then, allows for a viscosity capable of exhibiting excellent thickness uniformity when applied to manufacture a positive electrode and a negative electrode. Alternatively, the positive electrode and the negative electrode may also be manufactured by casting a composition for forming the active material layer on a separate support, and then laminating a film obtained by delaminating it from the support onto a current collector layer.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the migration of electrolyte solution ions is preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/-methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolytic solution with high electric conductivity may be prepared, and therefore, may be more preferably used.

A lithium salt may be used as the metal salt, and the lithium salt is a material that is readily soluble in the non-aqueous electrolytic solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethylphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

A battery module or battery pack according to an exemplary embodiment of the present specification may include the lithium secondary battery described above.

A battery pack according to another exemplary embodiment of the present specification may include a battery module including the lithium secondary battery described above.

Since the lithium secondary battery according to the exemplary embodiments of the present specification stably exhibits excellent discharge capacity, output characteristics and cycle performance, it can be used as a power source for a portable device such as a mobile phone, a laptop computer, and a digital camera, as well as a medium to large sized device selected from the group consisting of an electric vehicle, a hybrid electric vehicle, a plug-in hybrid electric vehicle, and a power storage system. For example, the battery module or battery pack may be used as a power source for one or more medium to large sized devices, such as a power tool; an electric car such as an electric vehicle (EV), a hybrid electric vehicle, and a plug-in hybrid electric vehicle (PHEV); or a power storage system.

[Mode for Invention]

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**Example 1**

A composition for a negative electrode active material layer was prepared using a silicon-based active material (average particle diameter (D50): 4 $\mu$m) as a negative electrode active material, SWCNTs, and a polyacrylamide binder in a weight ratio of 80:10:10. A negative electrode slurry (solid concentration: 30 wt%) was prepared by adding the composition to distilled water as a solvent for formation of a negative electrode slurry.

As a mixing method, the conductive material, the binder, and water were dispersed at 2500 rpm for 30 minutes using a homo mixer, the active material was added to the dispersion, and the resulting mixture was dispersed at 2500 rpm for 30 minutes to prepare a negative electrode slurry.

The negative electrode slurry was coated on both surfaces of a copper current collector (thickness: 8 $\mu$m) serving as a negative electrode current collector with a capacity of 8 mAh/cm$^2$, which was then roll-pressed and dried in a vacuum oven at 130°C for 10 hours to form a negative electrode active material layer (thickness: 30 $\mu$m).

A PET base material layer (thickness: 25 $\mu$m) was coated with a solution containing polymethylmethacrylate (PMMA) to form a release layer (thickness: 0.5 $\mu$m), a transfer laminate (thickness: 32.2 $\mu$m), in which a lithium metal layer (thickness: 6.2 $\mu$m) was deposited on top of the release layer by a physical vapor deposition (PVD) method, was prepared, and then the transfer laminate was brought into contact such that the lithium metal layer faced the negative active material layer and laminated, thereby proceeding with pre-lithiation at a capacity of 1.27 mAh/cm$^2$. After removing the PET base material layer (i.e., after transfer), two or more holes with a shortest distance between holes of 0.9 cm were formed on the surface to a depth equivalent to the thickness of the release layer.

**Example 2**

A pre-lithiated electrode of Example 2 was prepared in the same manner as in Example 1, except that the shortest distance between holes in the negative electrode of Example 1 was 0.2 cm.

**Comparative Example 1**

A pre-lithiated electrode of Comparative Example 1 was prepared in the same manner as in Example 1, except that no holes were formed in the negative electrode of Example 1.

**Comparative Example 2**

A pre-lithiated electrode of Comparative Example 2 was prepared in the same manner as in Example 1, except that the shortest distance between holes in the negative electrode of Example 1 was 1.5 cm.

**Example 3**

A pre-lithiated electrode of Example 3 was prepared in the same manner as in Example 1, except that the shortest distance between holes in the negative electrode of Example 1 was 0.1 cm.

**Example 4**

A pre-lithiated electrode of Example 4 was prepared in the same manner as in Example 1, except that the shortest distance between holes in the negative electrode of Example 1 was 0.05 cm.

**Example 5**

A pre-lithiated electrode of Example 5 was prepared in the same manner as in Example 1, except that the shortest distance between holes in the negative electrode of Example 1 was 0.04 cm.

**Comparative Example 3**

A pre-lithiated electrode of Comparative Example 3 was prepared in the same manner as in Example 1, except that the shortest distance between holes in the negative electrode of Example 1 was 0.02 cm.

**Comparative Example 4**

A pre-lithiated electrode of Comparative Example 4 was prepared in the same manner as in Example 1, except that the shortest distance between holes in the negative electrode of Example 1 was 0.01 cm.

**<Experimental Example 1>**

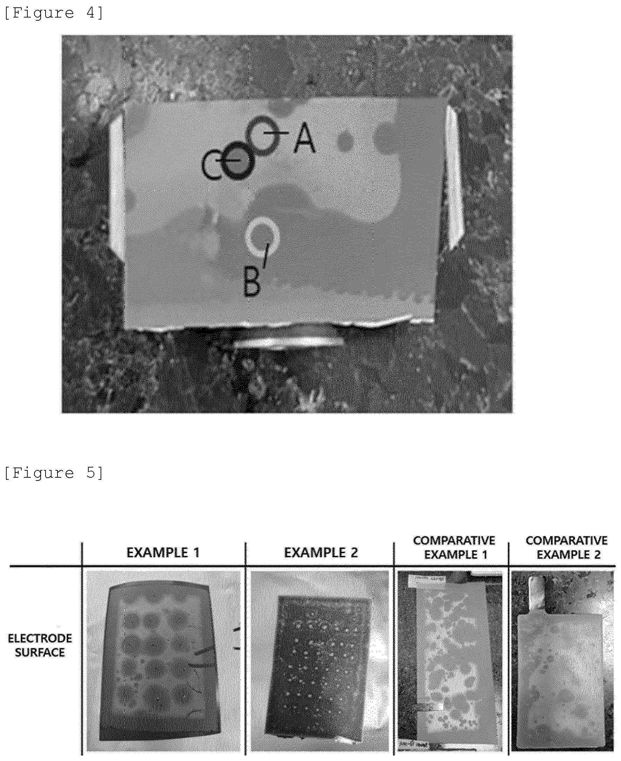

As shown in FIG. 4, it can be confirmed that a part where white byproducts are formed on the electrode surface after completion of the pre-lithiation exhibits a difference in shade compared to the background color. Specifically, FIG. 4 is a photograph showing the surface of a pre-lithiated electrode after removing the base material layer and the release layer using a tape after transfer of the transfer laminate. In this case, in order to confirm that the white color part on the electrode surface is a byproduct in the form of lithium oxide, the contents of elements (particularly, nitrogen and oxygen) in each region were analyzed using EDS with a SEM (JSM-7610F), and the results are shown in Table 1 below.

[Table 1]

| Element (%) | A region | B region | C region |
|---|---|---|---|
| Carbon (C) | 9.10 | 24.70 | 39.37 |
| Nitrogen (N) | 6.31 | 1.37 | 1.33 |
| Oxygen (O) | 84.58 | 73.83 | 59.18 |

It can be confirmed through Table 1 that the contents of nitrogen (N) and oxygen (O) are higher in the A region of FIG. 4, which indicates that the white appearance in this region is due to the formation of lithium nitride and lithium oxide.

On the other hand, it can be confirmed that the contents of nitrogen (N) and oxygen (O) are lower in the B region and the C region, which are black areas with the same background color. In this case, the purple region is the same region as the black region. The purple region exhibits the color caused by the release layer transferred together with lithium on the surface, and the black region exhibits the color in the state in which the release layer has been removed using a tape.

Using the shade difference as described above, the area of the byproduct region on the electrode surface can be calculated. The photographs of the electrode surfaces of Examples 1 and 2 and Comparative Examples 1 and 2 prepared according to the above preparation example are shown in FIG. 5, and the amount of byproducts formed on the surface of each electrode was calculated using the above method and is shown in Table 2 below.

[Table 2]

| | Shortest distance between holes (cm) | hole Longest diameter of hole ($\mu$m) | Transferred area (cm$^2$) | Byproduct area (cm$^2$) | Byproduct area (%) relative to transferred area |
|---|---|---|---|---|---|
| Example 1 | 0.9 | 50 | 17.34 | 6.99 | 40.3 |
| Example 2 | 0.2 | 50 | 17.34 | 7.11 | 41 |
| Comparative Example 1 | - | - | 236.6 | 104.14 | 44.01 |
| Comparative Example 2 | 1.5 | 50 | 17.34 | 8.78 | 51 |

As can be seen in FIG. 5, it was confirmed that the formation of byproducts was noticeably reduced around the holes formed in the electrode surfaces of Examples 1 and 2, and white byproducts in the form of lithium oxide were widely generated on the electrode surfaces of Comparative Example 1 where no holes were formed and Comparative Example 2 where the shortest distance between holes was 1.5 cm.

Specifically, as can be seen in Table 2 above, it was confirmed that the areas of the byproducts formed on the electrode surfaces of Examples 1 and 2 were only 41% or less of the area transferred with the lithium metal layer, and the area of the byproduct was significantly reduced compared to Comparative Example 1 where no holes were formed on the electrode surface and Comparative Example 2 where the shortest distance between holes was 1.5 cm.

**<Experimental Example 2>**

In order to confirm that the loss of lithium metal intended for use in pre-lithiation increases as the shortest distance

# EP 4 664 551 A1

between holes decreases, for the pre-lithiated electrodes of Examples 2 to 5 and Comparative Examples 3 and 4, the area ratio occupied by the holes within a 1 cm$^2$ square was calculated as a function of the shortest distance between the holes, with all holes having the longest diameter of 50 $\mu$m. The results are shown in Table 3 below.

In this case, the longest diameter of the holes within a 1 cm$^2$ square was 50 $\mu$m, the number of holes in a 1 cm$^2$ square was calculated based on the shortest distance between adjacent holes, and the area ratio occupied by the holes was calculated using Formula A below.

area ratio (%) = {(area of one hole (cm$^2$)) $\times$ (number of holes in a 1 cm$^2$ square)}/(square area of 1 cm$^2$) $\times$ 100     [Formula A]

[Table 3]

| | Example 2 | Example 3 | Example 4 | Example 5 | Comparative Example 3 | Comparative Example 4 |
|---|---|---|---|---|---|---|
| Shortest distance between holes (cm) | 0.2 | 0.1 | 0.05 | 0.04 | 0.02 | 0.01 |
| Number of holes | 16 | 81 | 361 | 576 | 2401 | 9801 |
| Area occupied by holes (cm$^2$) | 0.00031 4 | 0.00159 | 0.00708 | 0.0113 | 0.0471 | 0.1923 |
| Area ratio (%) | 0.0314 | 0.159 | 0.708 | 1.13 | 4.71 | 19.23 |

According to Table 3 above, it can be seen that in the electrodes of Examples 2 to 5 where the shortest distance between adjacent holes is 0.04 cm or greater, as the shortest distance between adjacent holes becomes narrower and the area ratio occupied by the holes increases, the loss amount of lithium metal becomes smaller and the heat generated during pre-lithiation can be easily released, while in Comparative Examples 3 and 4 where the shortest distance between adjacent holes is significantly smaller than 0.04 cm, the area ratio occupied by the holes increases four times or greater those of Examples 2 to 5, and as a result, the amount of lithium metal that is not used for pre-lithiation and is lost rather significantly increases.

In conclusion, in the method for manufacturing an electrode according to the present specification, two or more holes having a shortest distance between holes of 0.04 cm or greater and 1 cm or less are formed. Thereby, the loss amount of lithium metal intended for use in pre-lithiation can be minimized, and heat generated during pre-lithiation can be released, suppressing the formation of lithium byproducts on the electrode surface.

<Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

**Claims**

1. A method for manufacturing an electrode for a lithium secondary battery, the method comprising:

preparing a transfer laminate including a lithium metal layer, a release layer, and a base material layer; and
transferring the lithium metal layer and the release layer to at least one surface of an electrode active material layer such that the lithium metal layer comes into contact with the electrode active material layer,
wherein at least one of the lithium metal layer and the release layer transferred to at least one surface of the

17

electrode active material layer comprises two or more holes, and
wherein a shortest distance between adjacent holes is 0.04 cm or greater and 1 cm or less.

2.   The method of claim 1, wherein a longest diameter of the two or more holes is 5 $\mu$m to 50 $\mu$m.

3.   The method of claim 1, wherein the shortest distance between adjacent holes is 0.2 cm or greater and 0.9 cm or less.

4.   The method of claim 1, wherein the transferring the lithium metal layer and the release layer to at least one surface of the electrode active material layer comprises:

laminating the transfer laminate with an electrode active material layer such that the lithium metal layer comes into contact with at least one surface of the electrode active material layer;
separating the base material layer from the release layer; and
forming two or more holes in at least one of the lithium metal layer and the release layer after separating the base material layer.

5.   The method of claim 1, wherein the preparing the transfer laminate further comprises forming two or more holes in at least one of the lithium metal layer, the release layer, and the base material layer.

6.   The method of claim 1, wherein a thickness of the lithium metal layer is 1 $\mu$m or greater and 8 $\mu$m or less.

7.   The method of claim 1, further comprising forming an electrode active material layer by coating an electrode composition slurry on at least one surface of an electrode current collector layer before the transferring the lithium metal layer and the release layer to at least one surface of the electrode active material layer.

8.   The method of claim 1, wherein the electrode active material layer comprises a silicon-based negative electrode active material, a negative electrode conductive material, and a negative electrode binder.

9.   An electrode for a lithium secondary battery manufactured by the method of any one of claims 1 to 8.

10.  The electrode for a lithium secondary battery of claim 9, wherein an area of a lithium byproduct formed on a surface of the electrode relative to an area of the transfer laminate in contact with at least one surface of the electrode active material layer is 42% or less.

11.  An electrode for a lithium secondary battery, comprising:

an electrode current collector layer;
an electrode active material layer having a lithium metal layer transferred thereto; and
a lithium byproduct layer,
wherein the lithium byproduct layer exhibits 3% or more of nitrogen (N) and 75% or more of oxygen (O) when analyzed by Energy-dispersive X-ray Spectroscopy (EDS) with a Scanning Electron Microscope (SEM), and
wherein an area of the lithium byproduct layer relative to a total area of the lithium metal layer transferred to the electrode active material layer is 42% or less.

12.  A lithium secondary battery comprising:

the electrode for a lithium secondary battery of claim 9;
a separator; and
an electrolyte.

13.  A battery module comprising the lithium secondary battery of claim 12.

14.  A battery pack comprising the lithium secondary battery of claim 12.

15.  A battery pack comprising the battery module of claim 13.

[Figure 1]

[Figure 2]

[Figure 3]

(a)

| PREPARE TRANSFER LAMINATE INCLUDING LITHIUM METAL LAYER, RELEASE LAYER, AND BASE MATERIAL LAYER | S1 |

| TRANSFER LITHIUM METAL LAYER AND RELEASE LAYER TO AT LEAST ONE SURFACE OF ELECTRODE ACTIVE MATERIAL LAYER SUCH THAT LITHIUM METAL LAYER COMES INTO CONTACT WITH ELECTRODE ACTIVE MATERIAL LAYER | S2 |

(b)

| PREPARE TRANSFER LAMINATE INCLUDING LITHIUM METAL LAYER, RELEASE LAYER, AND BASE MATERIAL LAYER | S1 |

| LAMINATE TRANSFER LAMINATE WITH ELECTRODE ACTIVE MATERIAL LAYER SUCH THAT LITHIUM METAL LAYER COMES INTO CONTACT WITH AT LEAST ONE SURFACE OF ELECTRODE ACTIVE MATERIAL LAYER | S21 |

| SEPARATE BASE MATERIAL LAYER FROM RELEASE LAYER | S22 |

| FORM TWO OR MORE HOLES IN AT LEAST ONE OF LITHIUM METAL LAYER AND RELEASE LAYER AFTER SEPARATING BASE MATERIAL LAYER | S23 |

(c)

| PREPARE TRANSFER LAMINATE INCLUDING LITHIUM METAL LAYER, RELEASE LAYER, AND BASE MATERIAL LAYER | S1 |

| FORM TWO OR MORE HOLES IN AT LEAST ONE OF LITHIUM METAL LAYER, RELEASE LAYER, AND BASE MATERIAL LAYER | S1-1 |

| TRANSFER LITHIUM METAL LAYER AND RELEASE LAYER TO AT LEAST ONE SURFACE OF ELECTRODE ACTIVE MATERIAL LAYER SUCH THAT LITHIUM METAL LAYER COMES INTO CONTACT WITH ELECTRODE ACTIVE MATERIAL LAYER | S2 |

[Figure 4]

[Figure 5]

## INTERNATIONAL SEARCH REPORT

| International application No. |
| --- |
| **PCT/KR2024/015759** |

| A. | CLASSIFICATION OF SUBJECT MATTER |
| --- | --- |

**H01M 4/1395**(2010.01)i; **H01M 4/04**(2006.01)i; **H01M 4/38**(2006.01)i; **H01M 4/134**(2010.01)i; **H01M 10/42**(2006.01)i; **H01M 10/052**(2010.01)i; **H01M 4/62**(2006.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/1395(2010.01); H01M 10/052(2010.01); H01M 10/0525(2010.01); H01M 10/058(2010.01); H01M 4/02(2006.01); H01M 4/04(2006.01); H01M 4/13(2010.01); H01M 4/134(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지 (lithium secondary battery), 전극 (electrode), 리튬 금속층 (lithium metal layer), 이형층 (release layer), 홀 (hole), 전사 (transfer)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2023-0120254 A (LG ENERGY SOLUTION, LTD.) 17 August 2023 (2023-08-17)<br>See abstract; paragraphs [0016], [0067] and [0159]; and claims 8, 11 and 12. | 1-15 |
| A | KR 10-2021-0110142 A (KOREA ADVANCED INSTITUTE OF SCIENCE AND TECHNOLOGY) 07 September 2021 (2021-09-07)<br>See abstract; and claims 1-5. | 1-15 |
| A | JP 2007-273459 A (MATSUSHITA ELECTRIC IND. CO., LTD.) 18 October 2007 (2007-10-18)<br>See abstract; and claims 1-10. | 1-15 |
| A | KR 10-2021-0044507 A (LG CHEM, LTD.) 23 April 2021 (2021-04-23)<br>See abstract; and claims 1-14. | 1-15 |
| A | KR 10-2017-0052592 A (MITSUBISHI MATERIALS CORPORATION) 12 May 2017 (2017-05-12)<br>See abstract; and claims 1-17. | 1-15 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **11 February 2025** | **11 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/015759**

| Patent document cited in search report | | | Publication date (day/month/year) | Patent family member(s) | | | Publication date (day/month/year) |
|---|---|---|---|---|---|---|---|
| KR | 10-2023-0120254 | A | 17 August 2023 | CN | 117897825 | A | 16 April 2024 |
| | | | | EP | 4379842 | A1 | 05 June 2024 |
| | | | | JP | 2024-531162 | A | 29 August 2024 |
| | | | | US | 2024-0266494 | A1 | 08 August 2024 |
| | | | | WO | 2023-153716 | A1 | 17 August 2023 |
| KR | 10-2021-0110142 | A | 07 September 2021 | KR | 10-2023-0015481 | A | 31 January 2023 |
| | | | | KR | 10-2609846 | B1 | 05 December 2023 |
| | | | | US | 11973229 | B2 | 30 April 2024 |
| | | | | US | 2021-0408552 | A1 | 30 December 2021 |
| JP | 2007-273459 | A | 18 October 2007 | JP | 2013-020974 | A | 31 January 2013 |
| | | | | JP | 5151188 | B2 | 27 February 2013 |
| | | | | JP | 5476612 | B2 | 23 April 2014 |
| KR | 10-2021-0044507 | A | 23 April 2021 | CN | 113826248 | A | 21 December 2021 |
| | | | | CN | 113826248 | B | 13 September 2024 |
| | | | | EP | 3916861 | A1 | 01 December 2021 |
| | | | | EP | 3916861 | B1 | 17 April 2024 |
| | | | | ES | 2978129 | T3 | 05 September 2024 |
| | | | | HU | E067166 | T2 | 28 October 2024 |
| | | | | JP | 2022-523812 | A | 26 April 2022 |
| | | | | JP | 7351918 | B2 | 27 September 2023 |
| | | | | PL | 3916861 | T3 | 17 June 2024 |
| | | | | US | 2022-0173405 | A1 | 02 June 2022 |
| | | | | WO | 2021-075687 | A1 | 22 April 2021 |
| KR | 10-2017-0052592 | A | 12 May 2017 | CN | 106688126 | A | 17 May 2017 |
| | | | | EP | 3193392 | A1 | 19 July 2017 |
| | | | | JP | 2016-058374 | A | 21 April 2016 |
| | | | | JP | 5983821 | B2 | 06 September 2016 |
| | | | | TW | 201630232 | A | 16 August 2016 |
| | | | | US | 2017-0263933 | A1 | 14 September 2017 |
| | | | | WO | 2016-039264 | A1 | 17 March 2016 |

Form PCT/ISA/210 (patent family annex) (July 2022)

**EP 4 664 551 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230140985
- KR 1020240141418
- JP 7125228 B